# EUROPEAN PATENT SPECIFICATION

(11) **EP 0 984 447 B1**
(45) Date of publication and mention of the grant of the patent: **03.03.2004**
(21) Application number: 99909278.6
(22) Date of filing: 19.03.1999
(51) Int. Cl.: G11B 17/04, G11B 25/04, G11B 17/03, G11B 17/032, G11B 33/12, G11B 17/028

(54) **MAGNETIC RECORDING DEVICE**
MAGNETAUFZEICHNUNGSVORRICHTUNG
DISPOSITIF D'ENREGISTREMENT MAGNETIQUE

(30) Priority: 20.03.1998 JP 7159098
(43) Date of publication of application: 08.03.2000
(73) Proprietor: Citizen Watch Co. Ltd., Tokyo 188-8511 (JP); IOMEGA CORPORATION, Roy, Utah 84067 (US)
(72) Inventor: MUKAIJIMA, Katsutoshi, Higashikurume-shi, Tokyo 203-0032 (JP); WAKITA, Maki, Sayama-shi, Saitama 350-1307 (JP); TAKAHASHI, Shoji, Hanno-shi, Saitama 357-0006 (JP)
(74) Representative: Granleese, Rhian Jane
(86) International application number: PCT/JP1999/001413
(87) International publication number: WO 1999/049465

(56) References cited:
- JP-A- 7 105 673
- JP-A- 9 270 161
- US-A- 5 467 235
- US-A- 5 701 216

## Description

### BACKGROUND OF THE INVENTION

### 1. Field of the Invention

The present invention relates to an improvement of a magnetic recording unit where such a recording medium as a disk is housed in a cartridge so as to attach to such an information equipment as a portable computer.

### 2. Description of the Related Art

A card type magnetic recording unit, such as a PC card, is attached to portable information equipment, such as a portable compact computer, so that the portable information equipment reads information from the magnetic recording medium of the magnetic recording unit or writes information to the magnetic medium.

However, most of the card type magnetic recording units use a semiconductor memory for the recording medium, which is expensive and has small recording capacity.

To provide an inexpensive and portable recording unit, a card type recording unit, to which a cartridge housing a disk type recording medium is set, was developed so that the information stored on the recording medium (disk) is read by the head and is output to a computer or information from a computer is written to the disk by the head.

Such a magnetic recording unit, however, does not have a lid over a slot for inserting the cartridge housing the recording medium (disk): Therefore, a foreign substance enters into the magnetic recording unit through this slot, causing a functional failure to the card type magnetic recording unit.

US 5 701 216 (cf. the preamble of claim 1) discloses a shutter mechanism for a disk drive which includes at least one flat wire spring member inserted within lateral sides of opposing swingable shutters provided to a cartridge insertion opening to connect the shutters.

US 5 467 235 discloses an axis mechanism which supports a lid on a periphery of an opening so that the lid can rotate about a rotational axis.

JP-A-07105673 discloses a power mechanism for opening a door for preventing dust from infiltrating an aperture through which a cartridge is loaded/unloaded.

EP-A-0 788 103 discloses a storage device in which, when the recording medium cartridge is inserted into a frame, a slide member moves parallel to the frame and presses down a shaft under a restriction of a restriction member provided in the recording medium cartridge, so that the hub and the shaft engage.

### SUMMARY OF THE INVENTION

It is an objection of the present invention to provide a magnetic recording unit which does not allow a foreign substance to enter through the cartridge slot of the magnetic recording unit'when the magnetic recording unit is not housing a cartridge.

To achieve the above object, the invention provides a magnetic recording unit as set out in Claim 1. Preferred features of the invention are set out in Claims 2 to 12.

Since the lid body is disposed at the cartridge insertion slot of the magnetic recording unit, the present invention can prevent a foreign substance from entering the magnetic recording unit in a state when a cartridge is not loaded. As a consequence, a magnetic recording unit which has high reliability and good portability can be provided.

Also the lid body is structured so as to support the inner walls at the top and body of the case body, therefore deformation of the magnetic recording unit can be prevented even if an external force is exerted on the unit in the thickness direction, and as a result, a magnetic recording unit which has high safety can be provided.

Also a lid body housing section for housing the lid body may be disposed, by which the top face of the lid body and the top face of the frame plate become on the same plane, therefore the cartridge is guided by the top face of the lid body and the top face of the frame plate, so that the cartridge is loaded smoothly into the unit.

### BRIEF DESCRIPTION OF THE DRAWINGS

Fig. 1 is a perspective view viewed diagonally from the top depicting a magnetic recording unit and a cartridge of an embodiment in accordance with the present invention;
Fig. 2 is an explanatory drawing depicting the state where the top cover the magnetic recording unit in Fig. 1 is removed;
Fig. 3 is a cross-sectional view depicting the C-C cross-section in Fig. 2 (top cover is removed);
Fig. 4 is a drawing depicting details of the area around the cartridge insertion slot when the top cover and the frame plate are removed from the magnetic recording unit shown in Fig. 2;
Fig. 5 is a cross-sectional view depicting the D-D cross-section in Fig. 2 (top cover is attached);
Fig. 6 is a partially enlarged sectional view where the D portion in Fig. 3 is enlarged;
Fig. 7 is an explanatory drawing depicting the state where the edge of the cartridge is loaded in the magnetic recording unit shown in Fig. 6;
Fig. 8 is a partially enlarged sectional view where the portion related to the disk driving motor in the cross-sectional view shown in Fig. 3 is enlarged; and
Fig. 9 is a partially enlarged sectional view where the portion related to the record/playback head in the cross-sectional view shown in Fig. 3 is enlarged.

### DESCRIPTION OF THE PREFERRED EMBODIMENTS

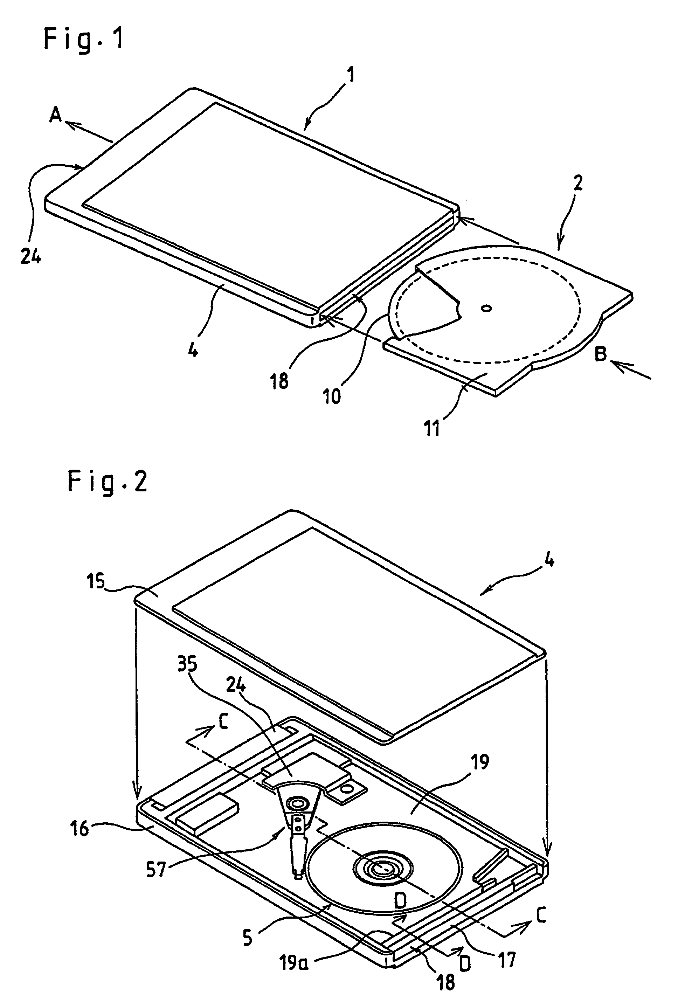

An overview of the magnetic recording unit 1 and the cartridge 2, which is set to the magnetic recording unit 1 or ejected thereof, will be explained with reference to Fig. 1.

The magnetic recording unit 1 is covered with a case body which is formed in a card shape having external dimensions conforming to the PCMCIA (Personal Computer Memory Card International Association) type II standard. The case body has a space to house the cartridge 2 inside, and encloses a mechanism section (described later) comprising of a motor for driving the disk, a playback/record head, a motor for driving the playback/record head, and a circuit board (not illustrated) for controlling these motors.

At the front end part of the case body, a connector 24 for attaching the magnetic recording unit to the computer main body is exposed. At the rear end part of the case body, a cartridge insertion slot 18 for inserting the cartridge 2 into the magnetic recording unit 1 is formed.

The cartridge 2 comprises a disk case 11 and a disk 10 which is housed in the disk case 11 and is a recording medium rotatably supported by the disk case 11.

The connector 24 is connected to the slot on an information equipment such as a computer (not illustrated) by moving the magnetic recording unit 1 in the arrow A direction. The cartridge 2 is set inside the magnetic recording unit 1 through the cartridge insertion slot 18 by moving the cartridge 2 in the arrow B direction.

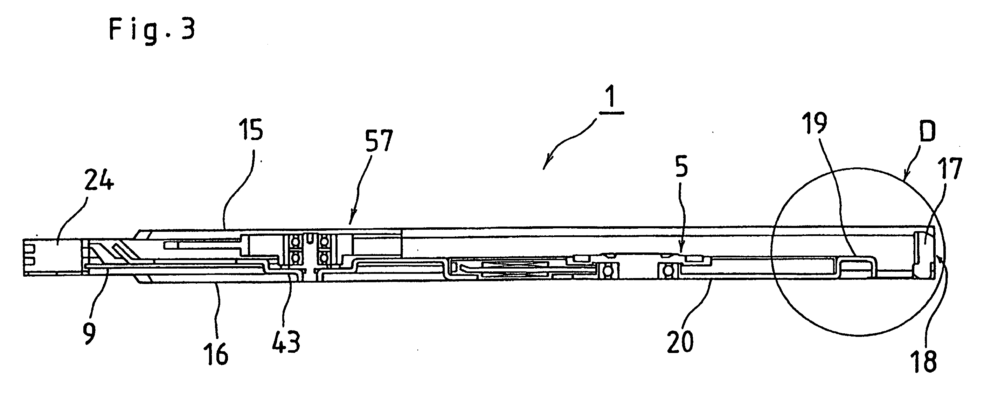

Now an overview of the magnetic recording unit 1 will be explained with reference to Fig. 2 and Fig. 3.

The case body comprises a bottom cover 16 and a top cover 15, as shown in Fig. 2. A frame plate 19 is disposed roughly at the center in the height direction of the space between the bottom cover 16 and the top cover 15. The connector 24 is attached to the front end of the frame plate 19. The disk drive motor 5, the record/playback head body 57 and the head motor for driving the record/playback head are mounted on the top face side of the frame plate 19. On the bottom face side of the frame plate 19, on the other hand, the circuit board having control circuits (not illustrated) is mounted.

The frame plate 19 is made of non-magnetic material, stainless steel having non-magnetic properties for example. On the frame plate 19, as shown in Fig. 3, a first mounting concave section 20 and a second mounting concave section 43 are formed by drawing processing respectively. In the frame plate 19, the first mounting concave section 20 is formed at a position where the disk drive motor 5 is mounted as shown in Fig. 2, and the second mounting concave section 43 is formed at the area where the record/playback head body 57 is mounted, also as shown in Fig. 2. Using the first mounting concave section 20 and the second mounting concave section 43, the disk drive motor 5 and the record/playback head body 57 (head drive motor) are installed, whose details are explained later.

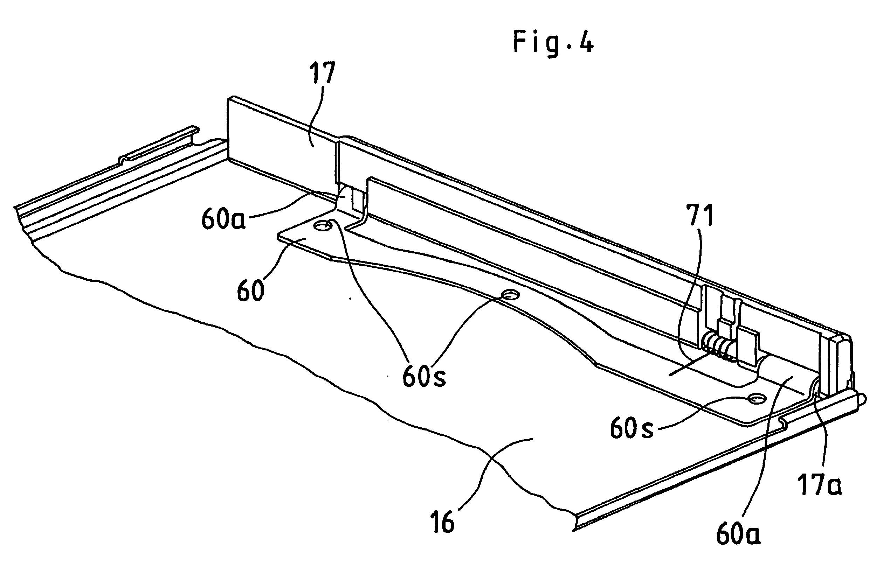

The lid body 17 for opening/closing the cartridge insertion slot 18 is installed inside the case body at a position near the cartridge insertion slot 18. The lid body 17, as shown in Fig. 2, is an element having a rectangular shape which stretches in the width direction of the case body when its cross-section is viewed. The structure of the lid 17 will now be described with reference to Fig. 4 to Fig. 7.

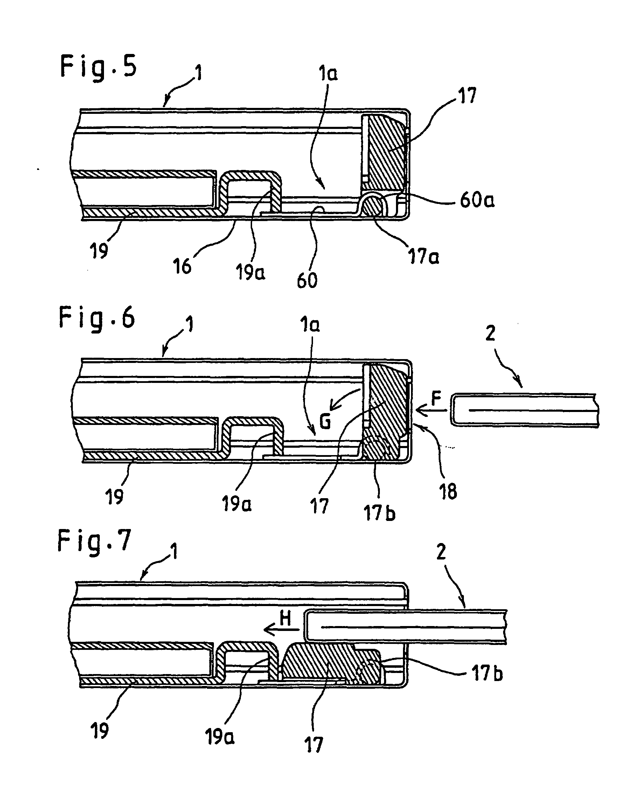

The base 17b of the lid body 17 is formed to be flat (see Fig. 6 and Fig. 7). On the face of the lid body 17 which faces the inside of the case body, a rotation shaft 17a of which axis is in the longitudinal direction of the lid body 17 is attached at two locations near the base 17b, at the left and right. In other words, the axis about which the lid body 17 rotates is fixed to be near the ridge line of the lid body 17 between the face which faces the inside of the case and the face which comes into contact with the bottom cover, when the cartridge insertion slot 18 is closed.

On the edge, at the side of the cartridge insertion slot 18, of the bottom cover 16 constituting the case body, as shown in Fig. 4, the plate shaped lid body support element 60 is joined by spot welding. The sign 60s in Fig. 4 denotes the spot welded locations. Both ends of the lid body support element 60 are extended toward the cartridge insertion slot 18, and the tips are bent and raised, forming the lid body support sections 60a to receive the rotation shaft 17a of the lid 17.

Therefore, if the rotation shaft 17a of the lid body 17 is inter-fitted in the lid body support sections 60a of the lid body support element 60, the lid body 17 can rotate around the rotation shaft 17a so as to tilt toward the inside of the case body.

The lid body 17, where rotation shafts 17a at the left and right are supported by the lid body support sections 60a of the lid body support element 60, is constantly receiving force in the direction to close the cartridge insertion slot 18 by a spring 71 for exerting force. The lid body 17 receiving force by the spring 71 contacts, along its entire width, the top and bottom inner walls of the cartridge insertion slot 18 of the case body, and as a result, a state closing the cartridge insertion slot 18 is maintained.

If a bending force in the width direction is exerted on the magnetic recording unit 1 (or on the case body) when the lid body 17 covers the cartridge insertion slot 18 by the force exerted by the spring 71, the lid body 17 supports the top and bottom inner walls of the case body. Since the base 17b of the lid body 17 is flat, the lid body 17 can support the top and bottom inner walls of the case body without rotating, even if an external force is exerted from outside the case body. Therefore, the magnetic recording unit 1 having a lid body so as to face the cartridge insertion slot 18 is resistant to bending in the left and right directions.

The edge of the frame plate 19 at the cartridge insertion slot 18 side is between the first mounting concave secttion 20 and the cartridge insertion slot 18, and is bent toward the bottom cover 16. Since the frame plate 19 has this section bent toward the bottom cover 16 (frame plate bent section 19a), resistance to bending in the width direction is increased.

A lid body housing section 1a occupies the area ranging from the frame plate bent section 19a to the cartridge insertion slot 18.

When the cartridge 2 is moved to the arrow F direction, as shown in Fig. 6, and the tip of the cartridge 2 pushes the lid body 17, the lid body 17 is pushed down inside the case, resisting the force exerted by the spring 71, that is, the lid body 17 rotates in the arrow G direction. If the cartridge 2 is pushed more in the arrow F direction, the lid body 17 rotates 90 degrees from the position closing the cartridge insertion slot 18, and is housed in the lid body housing section 1a as shown in Fig. 7.

The thickness of the lid body 17 is determined such that when the lid body 17 is housed in the lid body housing section 1a, the top face of the lid body 17 (that is, the external face of the lid body 17 which closes the cartridge insertion slot 18) and the top face of the frame plate 19 become substantially on the same plane.

Therefore, if the cartridge 2 is pushed further from the position in Fig. 7 toward the inside of the magnetic recording unit 1 (in the arrow H direction), the cartridge 2 is moved while being guided by the top face of the lid body 17 and the top face of the frame plate 19, reaching a predetermined position in the magnetic recording unit 1, engaging with the ejector mechanism (not illustrated). In this way, the rear part of the cartridge 2 which is set in the magnetic recording unit 1 is on the lid body 17 housed in the lid body housing section 1a.

If the cartridge 2 set in the magnetic recording unit 1 is pulled out, the lid body 17 housed in the lid body housing section 1a rises by the force exerted by the spring element, and closes the cartridge insertion slot 18. The state where the lid body 17 closes the cartridge insertion slot 18 is maintained by the force exerted by the spring element.

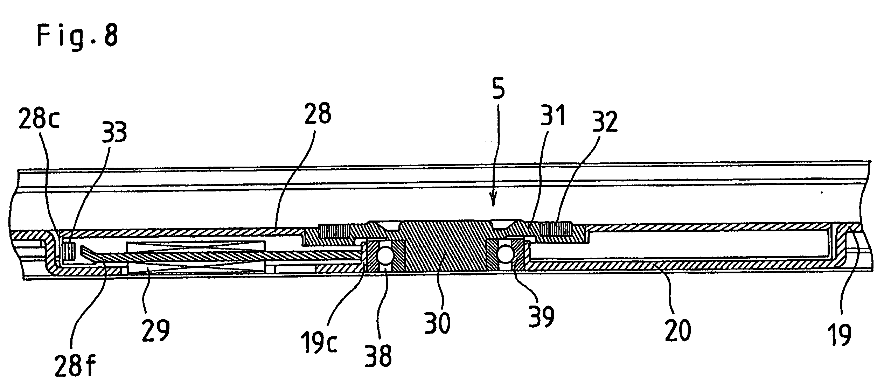

Next, mounting the disk drive motor at the first mounting concave section 20 formed in the frame plate 19 will be explained with reference to Fig. 8.

The first mounting concave section 20 formed by drawing processing has the shape of a shallow cup with a circular cross-section. At the base of the first mounting concave section 20, a disk drive motor mounting section 19c is formed around the opening 39 formed at the center by drawing processing in a direction opposite from the drawing direction of the first mounting concave section 20.

The motor bearing 38 is inter-fitted inside the disk drive motor mounting section 19c, and the rotor shaft 30 is inter-fitted inside the motor bearing 38. The mounting base 31 for mounting the disk 10 is formed on the rotor shaft 30, and a rotor 28 and a disk attraction magnet 32 are secured on the mounting base 31.

The rotor 28 has a shallow cup shape with a circular cross-section. The opening of this cup faces the base of the first mounting concave section 20. On the wall surrounding the rotor 28, a plurality of rotor magnets 33 are fixed at equal intervals in the circumference direction. The top face of the rotor 28 and the top face of the frame plate 19 are substantially on the same plane. The top face of the disk attraction magnets 32 is slightly higher than the top face of the rotor 28.

A yoke element 28f, which has a plurality of arms arranged radially, is inter-fitted in the disk drive motor mounting section 19c. This yoke element 28f is made of magnetic material and is secured at the first mounting concave section 20. A stater coil 29 is coiled on each arm. The tips of the arms, where the stater coil 29 is coiled closely, face the rotor magnets 33 of the rotor 28. The stater coil 29 is connected to the control circuit, which is formed on the circuit board disposed at the bottom face of the frame plate 19, and is driven by the control circuit.

The disk drive motor is comprised of the rotor 28 where the rotor magnets 33 are secured, and the yoke element where the stater coil 29 is coiled on the arms, as explained above.

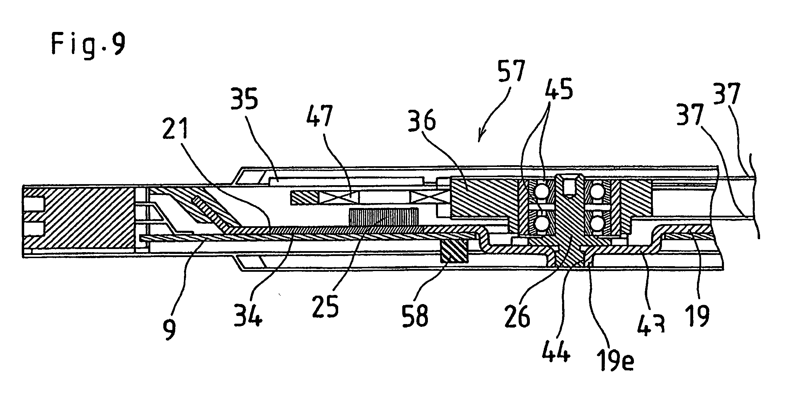

Next, mounting the record/playback head body 57 and the head drive motor for driving the record/playback head body 57 at the second mounting concave section 43 formed on the frame plate 19 will be explained with reference to Fig. 9.

The second mounting concave section 43 formed by drawing processing has a shallow cup shape with a circular cross-section. Furthermore, the head drive motor installation section 19e is formed at the center in the base of the second mounting concave section 43 by drawing processing, in the same direction as the drawing direction of the second mounting concave section 43.

The head shaft 26 is inter-fitted in the head drive motor mounting section 19e. On the head shaft 26, two head bearings 45 are inter-fitted. A head substrate 36, which is the substrate of the record/playback head body 57, is secured outside the two head bearings 45.

A head arm 37 and a head moving coil 47 are secured on the head substrate 36. The head arm 37 is formed as a long arm shape made of a thin plate, and the record/playback head (not illustrated) is mounted at the tip. This record/playback head faces the recording face of the disk 10 housed in the cartridge 2.

A roughly arc shaped opening 21 is formed in the frame plate 19 at the area facing the head moving coil 47. The center of the arc of the opening 21 is the center of the head shaft 26. The bottom yoke 34 is inter-fitted in this opening 21. This bottom yoke 34 is made of magnetic material, and its shape is the same as the shape (arc) of the opening 21, and the thickness is the same as the thickness of the frame plate 19. Therefore the thickness of the magnetic recording unit can be decreased by the thickness of the bottom yoke 34, compared with the case when the bottom yoke 34 is secured on top of the frame plate 19.

The head drive magnet 25 is secured on the bottom yoke 34 closely facing the bottom face of the head moving coil 47. The top yoke 35 is mounted on the frame plate 19 closely facing the top face of the head moving coil 47 (see Fig. 2). This top yoke 35 and bottom yoke 34 jointly create a magnetic field at the position of the head moving coil 47.

The head moving coil 47 is connected to the control circuit which is disposed on the circuit board at the bottom face side of the frame plate 19, and current is supplied to the head moving coil 47 by this control circuit.

The head drive motor is comprised of the top yoke 35, the bottom yoke 34, the head drive magnet 25, and the head moving coil 47, as explained above.

And as explained above, the top yoke 35, the bottom yoke 34 and the head drive magnet 25 generate a magnetic field at the position of the head moving coil 47 which generates a driving force in the head moving coil 47. By this drive force, the record/playback head (not illustrated) mounted on the head arm 37 can move in roughly a radial direction on the recording face of the disk 10, and can record/playback information to/from the disk 10.

## Claims

1. A magnetic recording unit (1) comprising:
an outermost case body having a cartridge insertion slot (18) to enable the insertion of a cartridge (2) housing a disk (10), which is a recording medium, inside the case body through the said cartridge insertion slot (18); and
a disk drive motor (5) for driving and rotating the said disk (10), a head for recording or playing back information to/from the said disk (10), and a head drive mechanism for driving the said head, which are disposed inside the case body,
wherein a lid body (17) for closing the said cartridge insertion slot (18) is disposed on the case body or on a support element mounted on the said case body at a location facing said cartridge insertion slot (18);
**characterized in that**
the said lid body (17) contacts, over the entire width thereof, an inner wall of the said case body at an area around the said cartridge insertion slot (18), when said cartridge insertion slot (18) is closed; and
the lid body (17) contacts upper and lower portions of the case body, which face the lid body (17), so as to prevent deformation of the case body due to an external force in a vertical direction.

2. A magnetic recording unit according to Claim 1, wherein the said lid body (17) closes the said cartridge insertion slot (18) from inside the said case body using a force exerted by a spring element (71).

3. A magnetic recording unit according to Claim 1 or Claim 2, wherein the said lid body (17) lowers inside and opens the cartridge insertion slot (18) when an external force exceeding said force exerted by the said spring element (71) is applied through the cartridge insertion slot (18).

4. A magnetic recording unit according to any one of Claims 1 to 3, wherein a housing section for housing the lid body (17) when lowered inside is formed in the said case body at an area near the cartridge insertion slot (18), such that when the lowered lid body (17) is housed in said housing section, a cartridge (2) passing through the cartridge insertion slot (18) can be guided on one face of the said lid body (17).

5. A magnetic recording unit according to Claim 4, wherein the said disk drive motor (5) and head drive mechanism are mounted using respective concave sections (20, 43) formed on a frame plate (19), such that when the lowered lid body (17) is housed in the housing section, the top face of the lid body (17) and a top face of the said frame plate (19) area where the above concave sections (20, 43) are not formed are substantially on the same plane.

6. A magnetic recording unit according to any one of Claims 1 to 5, wherein the said case body comprises a top cover and a bottom cover and, a face (17b) of the said lid body (17) which contacts the bottom cover in a state when the cartridge insertion slot (18) is closed is formed to be flat.

7. A magnetic recording unit according to any one of Claims 1 to 6, wherein the said lid body (17) is rotatably supported by a support element (60) mounted in the said case body.

8. A magnetic recording unit according to Claim 7, wherein said case body comprises a top cover and a bottom cover, and the axis about which said lid body (17) rotates exists near a ridge line of the lid body (17) between the face which faces the inside of the case body and the face (17b) which comes into contact with the bottom cover, when the lid body (17) closes the cartridge insertion slot (18).

9. A magnetic recording unit according to Claim 8, wherein the location where the said case body comes into contact with the said top cover lies right over the axis about which said lid body (17) rotates, in a plane perpendicular to the direction of cartridge insertion, in order that an external force applied to the case body does not cause the lid body (17) to rotate about the axis.

10. A magnetic recording unit according to any one of Claims 7 to 9, wherein the said lid body (17) has a rotation shaft (17a), and the said support element (60) has a rotation shaft support section (60a) which holds and rotatably supports said rotation shaft (17a).

11. A magnetic recording unit according to any one of Claims 7 to 10, wherein the said case body further comprises a top cover and a bottom cover, and the said support element (60) is mounted on either the top cover or the bottom cover.

12. A magnetic recording unit according to any one of Claims 7 to 11, wherein both ends of the said support element (60) mounted on either the top cover or the bottom cover extend toward the cartridge insertion slot (18), and tips of the said ends of the support element (60) are bent and raised, forming the rotation shaft support section (60a).

## Patentansprüche

1. Magnetische Aufzeichnungseinheit (1), umfassend:
einen äußersten Gehäusekörper, der einen Kassetteneinführschlitz (18) aufweist, damit die Einführung einer Kassette (2), in der eine Platte (10) untergebracht ist, die ein Aufzeichnungsmedium ist, über den Kassetteneinführschlitz (18) in den Gehäusekörper möglich ist und
einen Plattenantriebsmotor (5) für den Antrieb und die Rotation der Platte (10), einen Kopf für die Aufzeichnung von Informationen auf die Platte (10) oder die Wiedergabe von Informationen auf ihr sowie einen Kopfantriebsmechanismus für den Antrieb des Kopfes, der im Gehäusekörper angeordnet ist.
wobei ein Abdeckungskörper (17) zum Schließen des Kassetteneinführschlitzes (18) am Gehäusekörper oder an einem Abstützelement angeordnet ist, das am Gehäusekörper an einem Ort angebracht ist, der zum Kassetteneinführschlitz (18) zeigt;
**dadurch gekennzeichnet, dass**
der Abdeckungskörper (17), über dessen gesamte Breite, eine Innenwand des Gehäusekörpers an einem Bereich um den Kassetteneinführschlitz (18) berührt, wenn der Kassetteneinführschlitz (18) geschlossen ist und
der Abdeckungskörper (17) obere und untere Abschnitte des Gehäusekörpers berührt, die zum Abdeckungskörper (17) zeigen, um die Verformung des Gehäusekörpers infolge einer äußeren Kraft in einer vertikalen Richtung zu verhindern.

2. Magnetische Aufzeichnungseinheit nach Anspruch 1, wobei der Abdeckungskörper (17) den Kassetteneinführschlitz (18) vom Innenraum des Gehäusekörpers aus unter Verwendung einer durch das Federelement (71) ausgeübten Kraft schließt.

3. Magnetische Aufzeichnungseinheit nach Anspruch 1 oder Anspruch 2, wobei der Abdeckungskörper (17) sich nach innen absenkt und den Kassetteneinführschlitz (18) öffnet, wenn eine äußere Kraft, die die vom Federelement (71) ausgeübte Kraft überschreitet, durch den Kassetteneinführschlitz (18) hindurch aufgebracht wird.

4. Magnetische Aufzeichnungseinheit nach einem der Ansprüche 1 bis 3, wobei ein Gehäuseabschnitt, der zur Unterbringung des innen abgesenkten Abdeckungskörpers (17) dient, im Gehäusekörper an einem Bereich neben dem Kassetteneinführschlitz (18) so gebildet wird, dass wenn der abgesenkte Abdeckungskörper im Gehäuseabschnitt (17) untergebracht wird, eine Kassette (2), die durch den Kassetteneinführschlitz (18) hindurchgeführt wird, auf einer Seite des Abdeckungskörpers (17) geführt werden kann.

5. Magnetische Aufzeichnungseinheit nach Anspruch 4, wobei der Plattenantriebsmotor (5) und der Kopfantriebsmechanismus unter Verwendung der jeweiligen konkaven Abschnitte (20, 43) eingebaut sind, die auf einer Rahmenplatte (19) so ausgebildet sind, dass wenn der abgesenkte Abdeckungskörper (17) im Gehäuseabschnitt untergebracht ist, die Oberseite des Abdeckungskörpers (17) und eine Oberseite des Bereiches der Rahmenplatte (19), wo die obigen konkaven Abschnitte (20, 43) nicht ausgebildet sind, im Wesentlichen in derselben Ebene liegen.

6. Magnetische Aufzeichnungseinheit nach einem der Ansprüche 1 bis 5, wobei der Gehäusekörper eine obere Abdeckung und eine untere Abdeckung umfasst, und eine Seite (17b) des Abdeckungskörpers (17), die die untere Abdeckung in einem Zustand berührt, bei dem der Kassetteneinführschlitz (18) geschlossen ist, flach ausgeführt ist.

7. Magnetische Aufzeichnungseinheit nach einem der Ansprüche 1 bis 6, wobei der Abdeckungskörper (17) durch ein im Gehäusekörper eingebautes Abstützelement (60) drehbar gelagert ist.

8. Magnetische Aufzeichnungseinheit nach Anspruch 7, wobei der Abdeckungskörper eine obere Abdeckung und eine untere Abdeckung umfasst, und die Achse, um die sich der Abdeckungskörper (17) dreht, neben einer Firstlinie des Abdeckungskörpers (17) liegt, und zwar zwischen der Seite, die zum Innenraum des Gehäusekörpers zeigt und der Seite (17b), die mit der unteren Abdeckung in Berührung kommt, wenn der Abdeckungskörper (17) den Kassetteneinführschlitz (18) schließt.

9. Magnetische Aufzeichnungseinheit nach Anspruch 8, wobei der Ort, an dem der Gehäusekörper mit der oberen Abdeckung in Berührung kommt, rechts über der Achse liegt, um dem sich der Abdeckungskörper (17) dreht, und zwar in einer Ebene senkrecht zur Kassetteneinführrichtung, damit eine am Gehäusekörper aufgebrachte äußere Kraft nicht bewirkt, dass sich der Abdeckungskörper (17) um die Achse dreht

10. Magnetische Aufzeichnungseinheit nach einem der Ansprüche 7 bis 9, wobei der Abdeckungskörper (17) eine Drehachse (17a) hat und das Abstützelement (60) einen Drehachsen-Lagerabschnitt (60a) hat, der die Drehachse (17a) hält und drehbar lagert.

11. Magnetische Aufzeichnungseinheit nach einem der Ansprüche 7 bis 10, wobei der Gehäusekörper außerdem eine obere Abdeckung und eine untere Abdeckung umfasst, und das Abstützelement (60) entweder auf der oberen oder der unteren Abdeckung angebracht ist

12. Magnetische Aufzeichnungseinheit nach einem der Ansprüche 7 bis 11, wobei beide Enden des Abstützelementes (60), die entweder an der oberen Abdeckung oder der unteren Abdeckung angebracht sind, sich hin zum Kassetteneinführschlitz (18) erstrecken und die Spitzen der Enden des Abstützelementes (60) gebogen und hochgekantet sind, wodurch der Drehachsen-Lagerabschnitt (60a) gebildet wird.

## Revendications

1. Une unité d'enregistrement magnétique (1) comprenant:
un corps de boîtier le plus à l'extérieur ayant une fente d'insertion de cartouche (18) pour permettre l'insertion d'une cartouche (2) logeant un disque (10), qui est un support d'enregistrement, à l'intérieur du corps de boîtier à travers la fente d'insertion de cartouche (18); et
un moteur d'entraînement de disque (5) pour entraîner et faire tourner le disque (10), une tête pour l'enregistrement ou la reproduction d'information sur le disque (10) ou à partir de celui-ci, et un mécanisme de déplacement de tête pour déplacer la tête, qui sont disposés à l'intérieur du corps de boîtier,
dans lequel un corps de volet de fermeture (17) pour fermer la fente d'insertion de cartouche (18) est disposé sur le corps de boîtier ou sur un élément de support monté sur le corps de boîtier, à un emplacement faisant face à la fente d'insertion de cartouche (18);
**caractérisé en ce que**
le corps de volet de fermeture (17) vient en contact, sur la totalité de sa largeur, avec une paroi intérieure du corps de boîtier dans une région située autour de la fente d'insertion de cartouche (18), lorsque la fente d'insertion de cartouche (18) est fermée; et
le corps de volet de fermeture (17) vient en contact avec des parties supérieure et inférieure du corps de boîtier, qui font face au corps de volet de fermeture (17), de façon à empêcher une déformation du corps de boîtier sous l'effet d'une force externe dans une direction verticale.

2. Une unité d'enregistrement magnétique selon la revendication 1, dans laquelle le corps de volet de fermeture (17) ferme la fente d'insertion de cartouche (18) à partir de l'intérieur du corps de boîtier, en utilisant une force exercée par un élément à ressort (71).

3. Une unité d'enregistrement magnétique selon la revendication 1 ou la revendication 2, dans laquelle le corps de volet de fermeture (17) s'abaisse vers l'intérieur et ouvre la fente d'insertion de cartouche (18) lorsqu'une force externe dépassant la force exercée par l'élément à ressort (71) est appliquée à travers la fente d'insertion de cartouche (18).

4. Une unité d'enregistrement magnétique selon l'une quelconque des revendications 1 à 3, dans laquelle une section de logement pour loger le corps de volet de fermeture (17) lorsqu'il est abaissé vers l'intérieur, est formée dans le corps de boîtier, dans une région proche de la fente d'insertion de cartouche (18), de façon que lorsque le corps de volet de fermeture (17) abaissé est logé dans la section de logement, une cartouche (2) traversant la fente d'insertion de cartouche (18) puisse être guidée sur une face du corps de volet de fermeture (17).

5. Une unité d'enregistrement magnétique selon la revendication 4, dans laquelle le moteur d'entraînement de disque (5) et le mécanisme de déplacement de tête sont montés en utilisant des sections concaves respectives (20, 43) formées sur une plaque de châssis (19), de façon que lorsque le corps de volet de fermeture (17) abaissé est logé dans la section de logement, la face supérieure du corps de volet de fermeture (17) et une face supérieure de la région de plaque de châssis (19) dans laquelle les sections concaves (20, 43) ci-dessus ne sont pas formées, soient pratiquement sur le même plan.

6. Une unité d'enregistrement magnétique selon l'une quelconque des revendications 1 à 5, dans laquelle le corps de boîtier comprend un couvercle supérieur et un couvercle inférieur, et une face (17b) du corps de volet de fermeture (17) qui vient en contact avec le couvercle inférieur dans un état dans lequel la fente d'insertion de cartouche (18) est fermée, est formée de façon à être plane.

7. Une unité d'enregistrement magnétique selon l'une quelconque des revendications 1 à 6, dans laquelle le corps de volet de fermeture (17) est supporté de façon tournante par un élément de support (60) monté dans le corps de boîtier.

8. Une unité d'enregistrement magnétique selon la revendication 7, dans laquelle le corps de boîtier comprend un couvercle supérieur et un couvercle inférieur, et l'axe autour duquel le corps de volet de fermeture (17) tourne se trouve à proximité d'une arête du corps de volet de fermeture (17) entre la face qui fait face à l'intérieur du corps de boîtier et la face (17b) qui vient en contact avec le couvercle inférieur, lorsque le corps de volet de fermeture (17) ferme la fente d'insertion de cartouche (18).

9. Une unité d'enregistrement magnétique selon la revendication 8, dans laquelle l'emplacement auquel le corps de boîtier vient en contact avec le couvercle supérieur s'étend exactement au-dessus de l'axe autour duquel le corps de volet de fermeture (17) tourne, dans un plan perpendiculaire à la direction d'insertion de cartouche, afin qu'une force externe appliquée au corps de boîtier ne fasse pas tourner le corps de volet de fermeture (17) autour de l'axe.

10. Une unité d'enregistrement magnétique selon l'une quelconque des revendications 7 à 9, dans laquelle le corps de volet de fermeture (17) a un axe de rotation (17a), et l'élément de support (60) a une section de support d'axe de rotation (60a) qui maintient et supporte en rotation l'axe de rotation (17a).

11. Une unité d'enregistrement magnétique selon l'une quelconque des revendications 7 à 10, dans laquelle le corps de boîtier comprend en outre un couvercle supérieur et un couvercle inférieur, et l'élément de support (60) est monté sur le couvercle supérieur ou le couvercle inférieur.

12. Une unité d'enregistrement magnétique selon l'une quelconque des revendications 7 à 11, dans laquelle les deux extrémités de l'élément de support (60) montées sur le couvercle supérieur ou le couvercle inférieur s'étendent vers la fente d'insertion de cartouche (18), et des bouts de ces extrémités de l'élément de support (60) sont courbées et relevées, en formant la section de support d'axe de rotation (60a).
